# EUROPEAN PATENT SPECIFICATION

(11) **EP 4 164 977 B1**
(45) Date of publication and mention of the grant of the patent: **15.11.2023**
(21) Application number: 20731521.9
(22) Date of filing: 28.05.2020
(51) Int. Cl.: B66B 1/34, B66B 19/00

(54) **COMMISSIONING OF A SIGNALIZATION DEVICE IN AN ELEVATOR SYSTEM**
INBETRIEBNAHME EINER SIGNALISIERUNGSVORRICHTUNG IN EINER AUFZUGSANLAGE
MISE EN SERVICE D'UN DISPOSITIF DE SIGNALISATION DANS UN SYSTÈME D'ASCENSEUR

(43) Date of publication of application: 19.04.2023
(73) Proprietor: KONE Corporation, 00330 Helsinki (FI)
(72) Inventor: KOSKINEN, Santtu, 00330 HELSINKI (FI); MATTILA, Mikko, 00330 HELSINKI (FI); HEISKANEN, Mikko, 00330 HELSINKI (FI); PIIRONEN, Mikko, 00330 HELSINKI (FI); KOIVISTO, Ari, 00330 HELSINKI (FI); BELOV, Mika, 00330 HELSINKI (FI)
(74) Representative: Berggren Oy
(86) International application number: PCT/FI2020/050358
(87) International publication number: WO 2021/240047

(56) References cited:
- WO-A1-2017/220678
- WO-A1-2020/078535
- WO-A1-2020/079310
- US-A1- 2009 288 919
- US-A1- 2017 190 543

## Description

### TECHNICAL FIELD

The invention concerns in general the technical field of elevators. More particularly, the invention concerns management of elevator system.

### BACKGROUND

Elevator system comprises a plurality of devices communicatively connected to each other. One such device group is so-called elevator signalization devices of the elevator system. The term 'elevator signalization devices' refers to a group of devices being suitable of receiving service related instructions e.g. from passengers as well as outputting information to e.g. passengers. Some non-limiting examples of the elevator signalization devices may be buttons and other devices allowing passengers to indicate a service call to the elevator system, such as so-called destination operating panel (DOP), and lanterns, gongs, and any displays, for instance. Common to all elevator signalization devices is that when the elevator system is designed for a certain building, each elevator signalization device has an exact location defined in the building, such as a floor and other location information.

The elevator signalization devices are nowadays typically communicatively connected to a communication bus over which data to and from the elevator signalization devices may be delivered. The use of communication bus, such as CAN bus, has a drawback that it limits the communication between the entities due to limited bandwidth, but also that it is difficult to customize to specific needs as well as not all devices are integratable to such a communication network.

Documents WO 2017/220678 A1, US 2017/190543 A1 and US 2009/288919 A1 describe various approaches according to a state of the art for configuring devices of an elevator system.

Hence, there is need to introduce new approaches for elevator systems to mitigate, at least in part, the drawbacks of existing systems.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a control device, and a computer program product for commissioning an elevator signalization device to a communication network of an elevator system.

The objects of the invention are reached by a method, a control device, and a computer program product as defined by the respective independent claims.

According to a first aspect, a method for commissioning an elevator signalization device to a communication network of an elevator system is provided, the method, performed by a control device, comprises: receiving a system configuration data at least providing a network topology of the communication network and definitions of the elevator signalization device, the definitions of the elevator signalization device in the system configuration data at least defining a location of the elevator signalization device in a building the elevator system is operative and a communication port of a switching device the elevator signalization device is communicatively connected to; inquiring, in accordance with the network topology of the communication network, a network address of the elevator signalization device from the switching device, an inquiry is performed on a communication port basis for the switching device; associating the location of the elevator signalization device in the building as defined in the system configuration file with the network address of the elevator signalization device, received through the inquiry, based on the communication port of the switching device serving the elevator signalization device; and commissioning the elevator signalization device by transmitting a configuration data of the elevator signalization device to the network address of the elevator signalization device received through an association.

For example, network addresses of the elevator signalization devices are received on the communication port basis from a plurality of switching devices of the elevator system.

An association of the location of the elevator signalization device with the network address of the elevator signalization device may be performed by modifying the system configuration data by adding the network address of the elevator signalization device in a context of data of the elevator signalization device.

The method may further comprise: delivering the data describing the association to an elevator controller of the elevator system.

According to a second aspect, a control device for commissioning an elevator signalization device to a communication network of an elevator system is provided, the control device comprising: at least one processor; at least one memory including computer program code; the at least one memory and the computer program code configured to, with the at least one processor, cause the control device to perform: receive a system configuration data at least providing a network topology of the communication network and definitions of the elevator signalization device, the definitions of the elevator signalization device in the system configuration data at least defining a location of the elevator signalization device in a building the elevator system is operative and a communication port of a switching device the elevator signalization device is communicatively connected to; inquire, in accordance with the network topology of the communication network, a network address of the elevator signalization device from the switching device, an inquiry is performed on a communication port basis for the switching device; associate the location of the elevator signalization device in the building as defined in the system configuration file with the network address of the elevator signalization device, received through the inquiry, based on the communication port of the switching device serving the elevator signalization device; and commission the elevator signalization device by transmitting a configuration data of the elevator signalization device to the network address of the elevator signalization device received through an association.

For example, the control device may be arranged to receive network addresses of the elevator signalization devices on the communication port basis from a plurality of switching devices of the elevator system.

The control device may also be arranged to perform an association of the location of the elevator signalization device with the network address of the elevator signalization device by modifying the system configuration data by adding the network address of the elevator signalization device in a context of data of the elevator signalization device.

Still further, the control device may further be caused to: deliver the data describing the association to an elevator controller of the elevator system.

According to a third aspect, a computer program product for commissioning an elevator signalization device to a communication network of an elevator system is provided, which computer program product, when executed by at least one processor, cause a control device to perform the method according to the first aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically aspects for commissioning an elevator signalization device to a communication network of an elevator system according to an example embodiment.
Figure 2 illustrates schematically a data structure according to an example embodiment.
Figure 3 illustrates schematically a method according to an example embodiment.
Figure 4 illustrates schematically a modified data structure according to an example embodiment.
Figure 5 illustrates schematically a control device according to an example embodiment.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

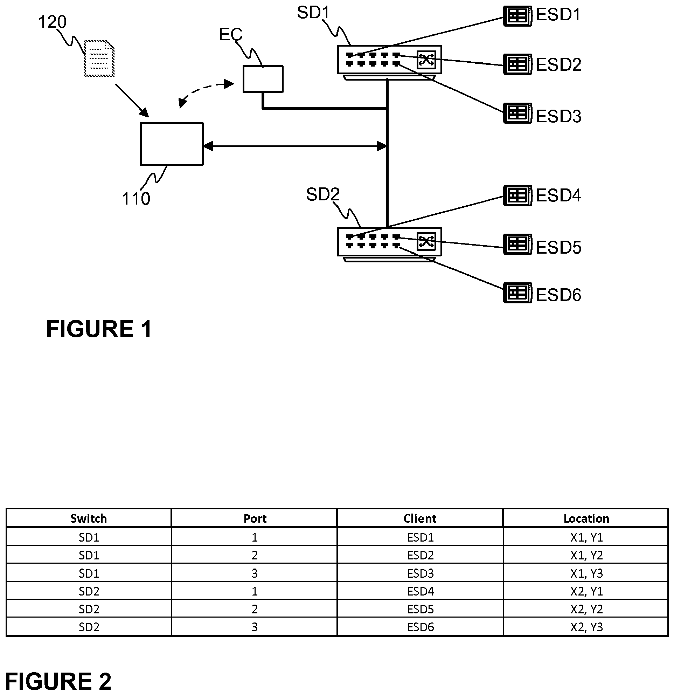

Figure 1 illustrates schematically some aspects of the invention according to an example embodiment for commissioning an elevator signalization device to a communication network of an elevator system. Here, the communication network is implemented with an IP based communication protocol, the communication network being e.g. an Ethernet network. The communication network may be implemented in the premises of the elevator system with a predefined network topology, such as a star topology or a mesh topology. The topology of the communication network is advantageously decided at a planning phase of the communication network for the elevator system in question. The communication network in accordance with the present invention comprise a number of switching devices SD1, SD2 into which a number of elevator signalization devices ESD1, ESD2, ESD3, ESD4, ESD5, ESD6 are communicatively connected to. The communicative connection refers to an arrangement that physical wires are arranged between the entities and the respective elevator signalization devices ESD1-ESD6 are communicatively connected to predefined ports of the switching devices SD1, SD2. In the non-limiting example as schematically illustrated in Figure 1 both switching devices SD1, SD2 are serving three elevator signalization devices ESD1-ESD6 and perform e.g. receiving and forwarding data to destination devices, i.e. to the elevator signalization devices ESD1-ESD6, e.g. from an elevator controller (referred with EC in Figure 1). Moreover, the switching devices SD1, SD2 may be further communicatively connected to an elevator controller EC so as to connect the elevator signalization devices ESD1-ESD6 to other parts of the elevator system so as to allow a generation of signals by the elevator signalization devices ESD1-ESD6 in accordance with control signals received from the elevator controller EC.

For sake of clarity it is worthwhile to mention that the elevator signalization devices ESD1-ESD6 are installed in planned locations within the premises of the elevator system, which means that the elevator signalization devices ESD1-ESD6 may be installed on different floors and different positions in halls of the floors, for example. In any case, the locations are known from the elevator system planning and as a result, the technicians are able to install correct elevator signalization devices ESD1-ESD6 in correct locations in accordance with the plan. As said the communicative connections to correct ports of the switching devices SD1, SD2 may also be performed in accordance with the plan.

In response to that the physical installation is ready and the physical connections are in place, there is need to perform a commissioning of the elevator signalization devices ESD1-ESD6 in use so as to enable their operation in the elevator system. In order to do this a control device 110 may be brought in a communicative connection to the communication network of the elevator system and, hence, with the switching devices SD1, SD2 and through them even with the elevator signalization devices ESD1-ESD6. The connection to the elevator communication network, such as the Ethernet network, may e.g. be performed by coupling the control device 110 to an applicable control port of the network, or one of the devices, such as to the switching devices SD1, SD2 (cf. arrow in Figure 1) or to the elevator controller arranged to control the operation of the elevator system. In some example embodiments the control device 110 may be the elevator controller if the elevator controller is arranged to perform network management operations, such as commissioning of devices into the communication network. In order to perform the commissioning of one or more elevator signalization devices ESD1-ESD6 to the communication network of the elevator system a system configuration data 120 may be input to the control device 110 e.g. as a form of a data file e.g. received from a system used for designing the elevator system.

The system configuration data 120 may comprise data providing, or describing, a network topology of the communication network and definitions of the elevator signalization devices ESD1-ESD6 belonging to the communication network. The definitions for the elevator signalization devices ESD1 -ESD6 may comprise data describing aspects of the communication network and its devices installed in the premises. Figure 2 illustrates schematically as a non-limiting example data structure providing definitions of the communication network and devices therein. For example, the definitions of the system configuration data 120 may define the switching devices SD1, SD2 installed to the premises and the communication ports of the respective switching devices SD1, SD2. Moreover, the definitions of the system configuration data 120 may define which elevator signalization device ESD1-ESD6 is to be connected to a respective communication port of the switching device SD1, SD2 as shown in Figure 2. Moreover, the definitions of the system configuration data 120 may comprise a definition for a location of each elevator signalization device ESD1-ESD6 in the premises. The definition of the location may be selected in any applicable manner. The definition may e.g. be arranged so that a floor and a location in the floor of the elevator signalization device ESD1-ESD6 in question are defined. In the data structure as shown in Figure 2 there are indicated two floors X1, X2 and the locations in the respective floors are indicated with Y1, Y2, Y3. In other words, in the imaginary example of Figure 2 it may be concluded that the elevator signalization devices ESD1-ESD6 are installed in the same locations in each floor X1, X2.

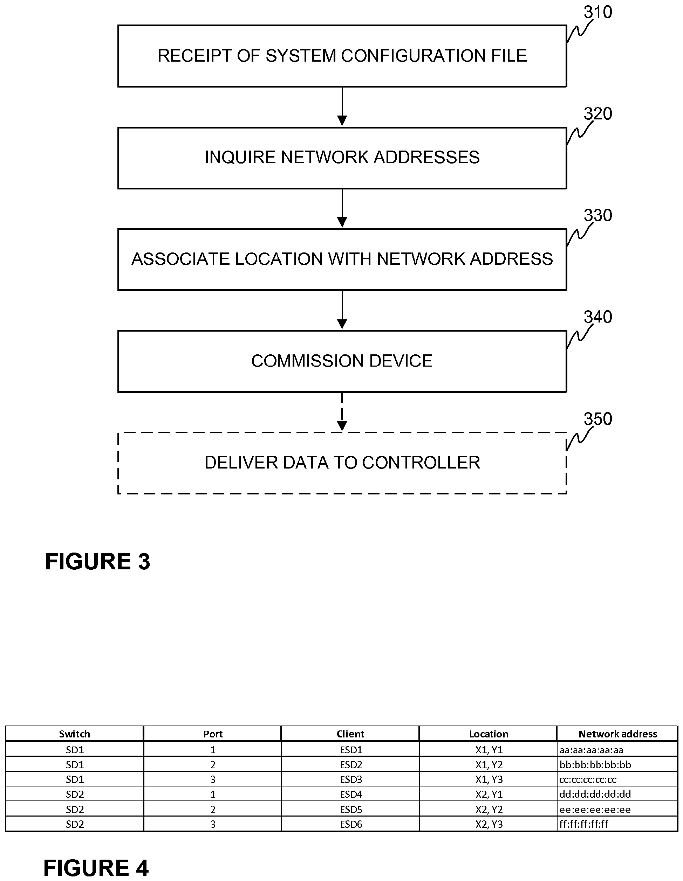

In the forthcoming description a commissioning of an elevator signalization device ESD1-ESD6 is described by referring to Figure 3 schematically illustrating a method according to an example embodiment. The method enables a commissioning of the elevator signalization device ESD1-ESD6 to a communication network of the elevator system so that they may be controlled with an elevator controller EC, for example. The method, as already mentioned, may be performed with a control device 110. In step 310, the control device may receive 310 a system configuration data providing a network topology of the communication network and definitions of the elevator signalization device ESD1-ESD6. As described in the foregoing description with respect to Figure 2 the definitions of the elevator signalization device ESD1-ESD6 of the system configuration file may at least define a location of the elevator signalization device ESD1-ESD6 in question in a building the elevator system is to be operative and a communication port of a switching device SD1, SD2 the elevator signalization device ESD1-ESD6 in question is communicatively connected to in order to operate in the communication network.

In response to an initiation of the commissioning the control device 110 may be arranged to generate a signal for inquiring 320, in accordance with the network topology of the communication network, a network address of the elevator signalization device ESD1-ESD6 from the switching device SD1, SD2, an inquiry is performed on a communication port basis for at least one switching device. In other words, the network topology information may be applied to generating the inquiries to the respective switching devices SD1, SD2, e.g. if the inquiry is performed directly to the switching device SD1, SD2, or through another switching device SD1, SD2. Performing the inquiry on a communication port basis for the switching device SD1, SD2 in question may refer to an operation in which the control device 110 is arranged to generate a dedicated inquiry to each port of the switching device SD1, SD2 so as to receive the network address of each of the port as a response to the inquiry. The control device 110 may perform the inquiry in the described manner because the network address, such as IP address, of the switching devices SD1, SD2 are known e.g. being static. Additionally, the network addresses of the elevator signalization devices ESD1-ESD6 connected to the ports may also be known especially if they are static in nature or they may be queried from the switching device SD1, SD2 separately in case they are dynamically allocated.

Now, the control device 110 possesses the network addresses, such as IP addresses of the elevator signalization devices ESD1-ESD6 belonging to the communication network and the system configuration file 120. In response to this the control device 110 may be arranged to associate 330 the location of the elevator signalization device ESD1-ESD6 under commissioning within the building as defined in the system configuration file with the network address of the elevator signalization device ESD1-ESD6, received through the inquiry, based on the communication port of the switching device SD1, SD2 serving the elevator signalization device ESD1-ESD6. In other words, the information of the communication port of the switching device SD1, SD2 is used as a linking factor between the two pieces of information so as to enable the association. The association may e.g. correspond to a procedure in which the system configuration file 120 is modified at least so that information on the network addresses of the elevator signalization devices ESD1-ESD6 are added in the data structure. An example of a modified system configuration file 120 is shown in Figure 4 which comprises the network addresses for the elevator signalization devices ESD1-ESD6.

In response the pieces of information are associated 330 as described the elevator signalization device ESD1-ESD6 may be commissioned 340 by transmitting a configuration data of the elevator signalization device ESD1-ESD6 to the network address of the elevator signalization device ESD1-ESD6 received through associating. The configuration data may e.g. be dependent on the location of the elevator signalization device ESD1-ESD6 and, hence, there is need to perform the distinction between the different elevator signalization devices ESD1-ESD6 by delivering a dedicated configuration data for each devices through determining the correct network address of the respective elevator signalization device ESD1-ESD6 in the manner as described.

In some example embodiments the data stored in the modified system configuration file may also be delivered 350 to the elevator controller EC for providing the elevator controller EC information for communicating with the elevator signalization devices ESD1-ESD6 during an operation of the elevator system. In other words, the control device 110 may be arranged to automatically deliver the data to the elevator controller EC in response the device is commissioned 340, or as a sub-step of the commissioning. The delivery of the described data may e.g. be performed over the communication network, or directly between the control device 110 and the elevator controller EC (cf. dashed arrow between the entities in Figure 1). The delivered modified system configuration file to the elevator controller EC may also comprise data indicating the network topology of the communication network e.g. to be used for generating of the control signals when the elevator system is operative.

In the described manner the elevator signalization devices ESD1-ESD6 may be commissioned in the system and be reachable by the elevator controller EC, which may e.g. operate on a basis of signaling indicating a location of a certain action. The certain action may e.g. refer to an elevator call given by a passenger, wherein the elevator call signal may carry at least a floor information and by using that the elevator controller EC may find necessary elevator signalization devices ESD1-ESD6 from the modified system configuration file, and may generate a control signal to the respective devices by applying the network addresses defined in the modified system configuration file.

As mentioned above, the method as described may be performed with respect to a plurality of switching devices SD1, SD2 connected to the communication network of the elevator system allowing a receipt of the network addresses of the elevator signalization devices ESD1-ESD6 belonging to the elevator system in question on the communication port basis.

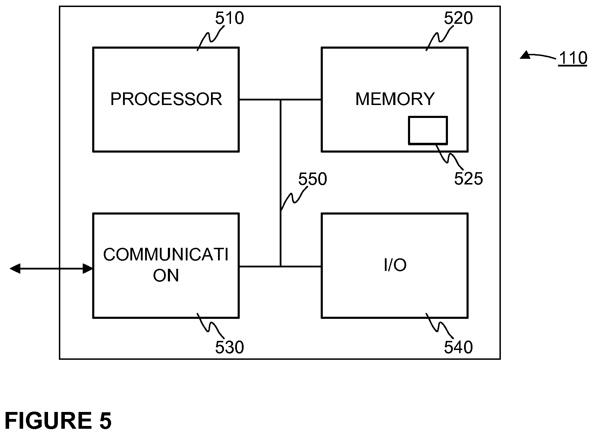

For example, the control device 110 may refer to a terminal device carried by a technician, such as a laptop computer, tablet computer, or a mobile phone, as schematically illustrated in Figure 5. Figure 5 illustrates schematically as a block diagram a non-limiting example of the control device 110 applicable to perform the method. The block diagram of Figure 5 depicts some components of a device that may be employed to implement an operation of the control device 110. The apparatus comprises a processor 510 and a memory 520. The memory 520 may store data and computer program code 525. The apparatus may further comprise communication means 530 for wired and/or wireless communication with other entities, such as connecting to the communication network and other systems and/or devices, such as data center managing the elevator system as well as databases and similar. Furthermore, I/O (input/output) components 540 may be arranged, together with the processor 510 and a portion of the computer program code 525, to provide a user interface for receiving input from a user, such as from the technician commissioning the devices, and/or providing output to the user of the system when necessary. In particular, the user I/O components may include user input means, such as one or more keys or buttons, a keyboard, a touchscreen, or a touchpad, etc. The user I/O components may include output means, such as a display or a touchscreen. The components of the apparatus may be communicatively coupled to each other via a bus 550 that enables transfer of data and control information between the components.

The memory 520 and a portion of the computer program code 525 stored therein may be further arranged, with the processor 510, to cause the apparatus, i.e. the device to perform a method as described in the foregoing description. The processor 510 may be configured to read from and write to the memory 520. Although the processor 510 is depicted as a respective single component, it may be implemented as respective one or more separate processing components. Similarly, although the memory 520 is depicted as a respective single component, it may be implemented as respective one or more separate components, some or all of which may be integrated/removable and/or may provide permanent / semi-permanent / dynamic / cached storage.

The computer program code 525 may comprise computer-executable instructions that implement functions that correspond to steps of the method when loaded into the processor 510. As an example, the computer program code 525 may include a computer program consisting of one or more sequences of one or more instructions. The processor 510 is able to load and execute the computer program by reading the one or more sequences of one or more instructions included therein from the memory 520. The one or more sequences of one or more instructions may be configured to, when executed by the processor 510, cause the apparatus to perform the method be described. Hence, the apparatus may comprise at least one processor 510 and at least one memory 520 including the computer program code 525 for one or more programs, the at least one memory 520 and the computer program code 525 configured to, with the at least one processor 510, cause the apparatus to perform the method as described.

The computer program code 525 may be provided e.g. a computer program product comprising at least one computer-readable non-transitory medium having the computer program code 525 stored thereon, which computer program code 525, when executed by the processor 510 causes the apparatus to perform the method. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 525 may comprise a proprietary application, such as computer program code for executing the commissioning of the elevator signalization device ESD1-ESD6 in the manner as described.

Any of the programmed functions mentioned may also be performed in firmware or hardware adapted to or programmed to perform the necessary tasks.

Moreover, as mentioned a functionality of the apparatus implementing the control device 110 may be shared between a plurality of devices as a distributed computing environment. For example, the distributed computing environment may comprise a plurality of devices as schematically illustrated in Figure 5 arranged to implement the method in cooperation with each other in a predetermined manner. For example, each device may be arranged to perform one or more method steps and in response to a finalization of its dedicated step it may hand a continuation of the process to the next device. The devices may e.g. be a terminal device of the technician and a server device residing in a data center controlling an operation of the elevator system.

The specific examples provided in the description given above should not be construed as limiting the applicability and/or the interpretation of the appended claims. Lists and groups of examples provided in the description given above are not exhaustive unless otherwise explicitly stated.

## Claims

1. A method for commissioning an elevator signalization device (ESD1, ESD2, ESD3, ESD4, ESD5, ESD6) to a communication network of an elevator system, the method, performed by a control device (110), comprises:
receiving a system configuration data (120) at least providing a network topology of the communication network and definitions of the elevator signalization device (ESD1, ESD2, ESD3, ESD4, ESD5, ESD6), the definitions of the elevator signalization device (ESD1, ESD2, ESD3, ESD4, ESD5, ESD6) in the system configuration data (120) at least defining a location of the elevator signalization device (ESD1, ESD2, ESD3, ESD4, ESD5, ESD6) in a building the elevator system is operative and a communication port of a switching device (SD1, SD2) the elevator signalization device (ESD1, ESD2, ESD3, ESD4, ESD5, ESD6) is communicatively connected to,
inquiring, in accordance with the network topology of the communication network, a network address of the elevator signalization device (ESD1, ESD2, ESD3, ESD4, ESD5, ESD6) from the switching device (SD1, SD2), an inquiry is performed on a communication port basis for the switching device (SD1, SD2),
associating the location of the elevator signalization device (ESD1, ESD2, ESD3, ESD4, ESD5, ESD6) in the building as defined in the system configuration file (120) with the network address of the elevator signalization device (ESD1, ESD2, ESD3, ESD4, ESD5, ESD6), received through the inquiry, based on the communication port of the switching device (SD1, SD2) serving the elevator signalization device (ESD1, ESD2, ESD3, ESD4, ESD5, ESD6), and
commissioning the elevator signalization device (ESD1, ESD2, ESD3, ESD4, ESD5, ESD6) by transmitting a configuration data of the elevator signalization device (ESD1, ESD2, ESD3, ESD4, ESD5, ESD6) to the network address of the elevator signalization device (ESD1, ESD2, ESD3, ESD4, ESD5, ESD6) received through an association.

2. The method of claim 1, wherein network addresses of the elevator signalization devices (ESD1, ESD2, ESD3, ESD4, ESD5, ESD6) are received on the communication port basis from a plurality of switching devices (SD1, SD2) of the elevator system.

3. The method of any of the preceding claims, wherein an association of the location of the elevator signalization device (ESD1, ESD2, ESD3, ESD4, ESD5, ESD6) with the network address of the elevator signalization device (ESD1, ESD2, ESD3, ESD4, ESD5, ESD6) is performed by modifying the system configuration data (120) by adding the network address of the elevator signalization device (ESD1, ESD2, ESD3, ESD4, ESD5, ESD6) in a context of data of the elevator signalization device (ESD1, ESD2, ESD3, ESD4, ESD5, ESD6).

4. The method of any of the preceding claims, the method further comprises:
delivering the data describing the association to an elevator controller (EC) of the elevator system.

5. A control device (110) for commissioning an elevator signalization device (ESD1, ESD2, ESD3, ESD4, ESD5, ESD6) to a communication network of an elevator system, the control device (110) comprising:
at least one processor (510);
at least one memory (520) including computer program code (525);
the at least one memory (520) and the computer program code (525) configured to, with the at least one processor (510), cause the control device (110) to perform:
receive a system configuration data (120) at least providing a network topology of the communication network and definitions of the elevator signalization device (ESD1, ESD2, ESD3, ESD4, ESD5, ESD6), the definitions of the elevator signalization device (ESD1, ESD2, ESD3, ESD4, ESD5, ESD6) in the system configuration data (120) at least defining a location of the elevator signalization device (ESD1, ESD2, ESD3, ESD4, ESD5, ESD6) in a building the elevator system is operative and a communication port of a switching device (SD1, SD2) the elevator signalization device (ESD1, ESD2, ESD3, ESD4, ESD5, ESD6) is communicatively connected to,
inquire, in accordance with the network topology of the communication network, a network address of the elevator signalization device (ESD1, ESD2, ESD3, ESD4, ESD5, ESD6) from the switching device (SD1, SD2), an inquiry is performed on a communication port basis for the switching device (SD1, SD2),
associate the location of the elevator signalization device (ESD1, ESD2, ESD3, ESD4, ESD5, ESD6) in the building as defined in the system configuration file (120) with the network address of the elevator signalization device (ESD1, ESD2, ESD3, ESD4, ESD5, ESD6), received through the inquiry, based on the communication port of the switching device (SD1, SD2) serving the elevator signalization device (ESD1, ESD2, ESD3, ESD4, ESD5, ESD6), and
commission the elevator signalization device (ESD1, ESD2, ESD3, ESD4, ESD5, ESD6) by transmitting a configuration data of the elevator signalization device (ESD1, ESD2, ESD3, ESD4, ESD5, ESD6) to the network address of the elevator signalization device (ESD1, ESD2, ESD3, ESD4, ESD5, ESD6) received through an association.

6. The control device (110) of claim 5, wherein the control device (110) is arranged to receive network addresses of the elevator signalization devices (ESD1, ESD2, ESD3, ESD4, ESD5, ESD6) on the communication port basis from a plurality of switching devices (SD1, SD2) of the elevator system.

7. The control device (110) of any of the preceding claims 5-6, wherein the control device (110) is arranged to perform an association of the location of the elevator signalization device (ESD1, ESD2, ESD3, ESD4, ESD5, ESD6) with the network address of the elevator signalization device (ESD1, ESD2, ESD3, ESD4, ESD5, ESD6) by modifying the system configuration data (120) by adding the network address of the elevator signalization device (ESD1, ESD2, ESD3, ESD4, ESD5, ESD6) in a context of data of the elevator signalization device (ESD1, ESD2, ESD3, ESD4, ESD5, ESD6).

8. The control device (110) of any of the preceding claims 5-7, the control device (110) further caused to:
deliver the data describing the association to an elevator controller (EC) of the elevator system.

9. A computer program product for commissioning an elevator signalization device (ESD1, ESD2, ESD3, ESD4, ESD5, ESD6) to a communication network of an elevator system which computer program product, when executed by the at least one processor of the control device (110) according to any of claims 5-8, causes the control device (110) to perform the method according to any of claims 1-4.

## Patentansprüche

1. Verfahren zur Inbetriebnahme einer Aufzugssignalisierungsvorrichtung (ESD1, ESD2, ESD3, ESD4, ESD5, ESD6) an einem Kommunikationsnetzwerk eines Aufzugssystems, wobei das Verfahren, durchgeführt durch eine Steuervorrichtung (110), umfasst:
Empfangen von Systemkonfigurationsdaten (120), die mindestens eine Netzwerktopologie des Kommunikationsnetzwerks und Definitionen der Aufzugssignalisierungsvorrichtung (ESD1, ESD2, ESD3, ESD4, ESD5, ESD6) bereitstellen, wobei die Definitionen der Aufzugssignalisierungsvorrichtung (ESD1, ESD2, ESD3, ESD4, ESD5, ESD6) in den Systemkonfigurationsdaten (120) mindestens einen Ort der Aufzugssignalisierungsvorrichtung (ESD1, ESD2, ESD3, ESD4, ESD5, ESD6) in einem Gebäude, in dem das Aufzugssystem betrieben wird, und einen Kommunikationsanschluss einer Schaltvorrichtung (SD1, SD2), mit dem die Aufzugssignalisierungsvorrichtung (ESD1, ESD2, ESD3, ESD4, ESD5, ESD6) kommunikativ verbunden ist, definieren,
Abfragen, gemäß der Netzwerktopologie des Kommunikationsnetzwerks, einer Netzwerkadresse der Aufzugssignalisierungsvorrichtung (ESD1, ESD2, ESD3, ESD4, ESD5, ESD6) von der Schaltvorrichtung (SD1, SD2), wobei eine Abfrage auf einer Basis des Kommunikationsanschlusses für die Schaltvorrichtung (SD1, SD2) durchgeführt wird,
Assoziieren des Orts der Aufzugssignalisierungsvorrichtung (ESD1, ESD2, ESD3, ESD4, ESD5, ESD6) in dem Gebäude, wie in der Systemkonfigurationsdatei (120) definiert, mit der durch die Abfrage empfangenen Netzwerkadresse der Aufzugssignalisierungsvorrichtung (ESD1, ESD2, ESD3, ESD4, ESD5, ESD6) basierend auf dem Kommunikationsanschluss der Schaltvorrichtung (SD1, SD2), die die Aufzugssignalisierungsvorrichtung (ESD1, ESD2, ESD3, ESD4, ESD5, ESD6) bedient, und
Inbetriebnehmen der Aufzugssignalisierungsvorrichtung (ESD1, ESD2, ESD3, ESD4, ESD5, ESD6) durch Übertragen von Konfigurationsdaten der Aufzugssignalisierungsvorrichtung (ESD1, ESD2, ESD3, ESD4, ESD5, ESD6) an die durch eine Assoziation empfangene Netzwerkadresse der Aufzugssignalisierungsvorrichtung (ESD1, ESD2, ESD3, ESD4, ESD5, ESD6).

2. Verfahren nach Anspruch 1, wobei Netzwerkadressen der Aufzugssignalisierungsvorrichtungen (ESD1, ESD2, ESD3, ESD4, ESD5, ESD6) auf der Basis des Kommunikationsanschlusses von einer Vielzahl von Schaltvorrichtungen (SD1, SD2) des Aufzugsystems empfangen werden.

3. Verfahren nach einem der vorhergehenden Ansprüche, wobei eine Assoziation des Orts der Aufzugssignalisierungsvorrichtung (ESD1, ESD2, ESD3, ESD4, ESD5, ESD6) mit der Netzwerkadresse der Aufzugssignalisierungsvorrichtung (ESD1, ESD2, ESD3, ESD4, ESD5, ESD6) durchgeführt wird, indem die Systemkonfigurationsdaten (120) durch Hinzufügen der Netzwerkadresse der Aufzugssignalisierungsvorrichtung (ESD1, ESD2, ESD3, ESD4, ESD5, ESD6) in einen Kontext von Daten der Aufzugssignalisierungsvorrichtung (ESD1, ESD2, ESD3, ESD4, ESD5, ESD6) modifiziert werden.

4. Verfahren nach einem der vorhergehenden Ansprüche, wobei das Verfahren ferner umfasst:
Liefern der Daten, die die Assoziation beschreiben, an eine Aufzugssteuerung (EC) des Aufzugsystems.

5. Steuervorrichtung (110) zur Inbetriebnahme einer Aufzugssignalisierungsvorrichtung (ESD1, ESD2, ESD3, ESD4, ESD5, ESD6) an einem Kommunikationsnetzwerk eines Aufzugssystems, die Steuervorrichtung (110) umfassend:
mindestens einen Prozessor (510);
mindestens einen Speicher (520), der Computerprogrammcode (525) enthält;
wobei der mindestens eine Speicher (520) und der Computerprogrammcode (525) konfiguriert sind, mit dem mindestens einen Prozessor (510) die Steuervorrichtung (110) zu veranlassen, Folgendes durchzuführen:
Empfangen von Systemkonfigurationsdaten (120), die mindestens eine Netzwerktopologie des Kommunikationsnetzwerks und Definitionen der Aufzugssignalisierungsvorrichtung (ESD1, ESD2, ESD3, ESD4, ESD5, ESD6) bereitstellen, wobei die Definitionen der Aufzugssignalisierungsvorrichtung (ESD1, ESD2, ESD3, ESD4, ESD5, ESD6) in den Systemkonfigurationsdaten (120) mindestens einen Ort der Aufzugssignalisierungsvorrichtung (ESD1, ESD2, ESD3, ESD4, ESD5, ESD6) in einem Gebäude, in dem das Aufzugssystem betrieben wird, und einen Kommunikationsanschluss einer Schaltvorrichtung (SD1, SD2), mit dem die Aufzugssignalisierungsvorrichtung (ESD1, ESD2, ESD3, ESD4, ESD5, ESD6) kommunikativ verbunden ist, definieren,
Abfragen, gemäß der Netzwerktopologie des Kommunikationsnetzwerks, einer Netzwerkadresse der Aufzugssignalisierungsvorrichtung (ESD1, ESD2, ESD3, ESD4, ESD5, ESD6) von der Schaltvorrichtung (SD1, SD2), wobei eine Abfrage auf einer Basis des Kommunikationsanschlusses für die Schaltvorrichtung (SD1, SD2) durchgeführt wird,
Assoziieren des Orts der Aufzugssignalisierungsvorrichtung (ESD1, ESD2, ESD3, ESD4, ESD5, ESD6) in dem Gebäude, wie in der Systemkonfigurationsdatei (120) definiert, mit der durch die Abfrage empfangenen Netzwerkadresse der Aufzugssignalisierungsvorrichtung (ESD1, ESD2, ESD3, ESD4, ESD5, ESD6) basierend auf dem Kommunikationsanschluss der Schaltvorrichtung (SD1, SD2), die die Aufzugssignalisierungsvorrichtung (ESD1, ESD2, ESD3, ESD4, ESD5, ESD6) bedient, und
Inbetriebnehmen der Aufzugssignalisierungsvorrichtung (ESD1, ESD2, ESD3, ESD4, ESD5, ESD6) durch Übertragen von Konfigurationsdaten der Aufzugssignalisierungsvorrichtung (ESD1, ESD2, ESD3, ESD4, ESD5, ESD6) an die durch eine Assoziation empfangene Netzwerkadresse der Aufzugssignalisierungsvorrichtung (ESD1, ESD2, ESD3, ESD4, ESD5, ESD6).

6. Steuervorrichtung (110) nach Anspruch 5, wobei die Steuervorrichtung (110) angeordnet ist, Netzwerkadressen der Aufzugssignalisierungsvorrichtungen (ESD1, ESD2, ESD3, ESD4, ESD5, ESD6) auf der Basis des Kommunikationsanschlusses von einer Vielzahl von Schaltvorrichtungen (SD1, SD2) des Aufzugsystems zu empfangen.

7. Steuervorrichtung (110) nach einem der vorhergehenden Ansprüche 5-6, wobei die Steuervorrichtung (110) angeordnet ist, eine Assoziation des Orts der Aufzugssignalisierungsvorrichtung (ESD1, ESD2, ESD3, ESD4, ESD5, ESD6) mit der Netzwerkadresse der Aufzugssignalisierungsvorrichtung (ESD1, ESD2, ESD3, ESD4, ESD5, ESD6) durchzuführen, indem die Systemkonfigurationsdaten (120) durch Hinzufügen der Netzwerkadresse der Aufzugssignalisierungsvorrichtung (ESD1, ESD2, ESD3, ESD4, ESD5, ESD6) in einen Kontext von Daten der Aufzugssignalisierungsvorrichtung (ESD1, ESD2, ESD3, ESD4, ESD5, ESD6) modifiziert werden.

8. Steuervorrichtung (110) nach einem der vorhergehenden Ansprüche 5-7, wobei die Steuervorrichtung (110) ferner veranlasst wird zum:
Liefern der Daten, die die Assoziation beschreiben, an eine Aufzugssteuerung (EC) des Aufzugsystems.

9. Computerprogrammprodukt zur Inbetriebnahme einer Aufzugssignalisierungsvorrichtung (ESD1, ESD2, ESD3, ESD4, ESD5, ESD6) an einem Kommunikationsnetzwerk eines Aufzugssystems, wobei das Computerprogrammprodukt, wenn es durch den mindestens einen Prozessor der Steuervorrichtung (110) nach einem der Ansprüche 5-8 ausgeführt wird, die Steuervorrichtung (110) veranlasst, das Verfahren nach einem der Ansprüche 1-4 durchzuführen.

## Revendications

1. Procédé de mise en service d'un dispositif de signalisation d'ascenseur (ESD1, ESD2, ESD3, ESD4, ESD5, ESD6) relativement à un réseau de communication d'un système d'ascenseur, le procédé, réalisé par un dispositif de commande (110), comprend :
la réception de données de configuration système (120) fournissant au moins une topologie de réseau du réseau de communication et des définitions du dispositif de signalisation d'ascenseur (ESD1, ESD2, ESD3, ESD4, ESD5, ESD6), les définitions du dispositif de signalisation d'ascenseur (ESD1, ESD2, ESD3, ESD4, ESD5, ESD6) dans les données de configuration système (120) définissant au moins un emplacement du dispositif de signalisation d'ascenseur (ESD1, ESD2, ESD3, ESD4, ESD5, ESD6) dans un bâtiment dans lequel fonctionne le système d'ascenseur et un port de communication d'un dispositif de commutation (SD1, SD2) auquel le dispositif de signalisation d'ascenseur (ESD1, ESD2, ESD3, ESD4, ESD5, ESD6) est connecté de manière communicative,
l'interrogation, conformément à la topologie de réseau du réseau de communication, d'une adresse réseau du dispositif de signalisation d'ascenseur (ESD1, ESD2, ESD3, ESD4, ESD5, ESD6) par le dispositif de commutation (SD1, SD2), une interrogation étant réalisée sur la base d'un port de communication du dispositif de commutation (SD1, SD2),
l'association de l'emplacement du dispositif de signalisation d'ascenseur (ESD1, ESD2, ESD3, ESD4, ESD5, ESD6) dans le bâtiment tel que défini dans le fichier de configuration système (120) à l'adresse réseau du dispositif de signalisation d'ascenseur (ESD1, ESD2, ESD3, ESD4, ESD5, ESD6), reçue par le biais de l'interrogation, sur la base du port de communication du dispositif de commutation (SD1, SD2) qui dessert le dispositif de signalisation d'ascenseur (ESD1, ESD2, ESD3, ESD4, ESD5, ESD6), et
la mise en service du dispositif de signalisation d'ascenseur (ESD1, ESD2, ESD3, ESD4, ESD5, ESD6) en transmettant des données de configuration du dispositif de signalisation d'ascenseur (ESD1, ESD2, ESD3, ESD4, ESD5, ESD6) à l'adresse réseau du dispositif de signalisation d'ascenseur (ESD1, ESD2, ESD3, ESD4, ESD5, ESD6) reçue par association.

2. Procédé selon la revendication 1, dans lequel des adresses réseau des dispositifs de signalisation d'ascenseur (ESD1, ESD2, ESD3, ESD4, ESD5, ESD6) sont reçues sur la base du port de communication à partir d'une pluralité de dispositifs de commutation (SD1, SD2) du système d'ascenseur.

3. Procédé selon l'une quelconque des revendications précédentes, dans lequel une association de l'emplacement du dispositif de signalisation d'ascenseur (ESD1, ESD2, ESD3, ESD4, ESD5, ESD6) à l'adresse réseau du dispositif de signalisation d'ascenseur (ESD1, ESD2, ESD3, ESD4, ESD5, ESD6) est réalisée en modifiant les données de configuration système (120) en ajoutant l'adresse réseau du dispositif de signalisation d'ascenseur (ESD1, ESD2, ESD3, ESD4, ESD5, ESD6) dans un contexte de données du dispositif de signalisation d'ascenseur (ESD1, ESD2, ESD3, ESD4, ESD5, ESD6).

4. Procédé selon l'une quelconque des revendications précédentes, le procédé comprenant en outre :
la fourniture des données décrivant l'association à un contrôleur d'ascenseur (EC) du système d'ascenseur.

5. Dispositif de commande (110) pour la mise en service d'un dispositif de signalisation d'ascenseur (ESD1, ESD2, ESD3, ESD4, ESD5, ESD6) relativement à un réseau de communication d'un système d'ascenseur, le dispositif de commande (110) comprenant :
au moins un processeur (510) ;
au moins une mémoire (520) comportant un code de programme d'ordinateur (525) ;
l'au moins une mémoire (520) et le code de programme d'ordinateur (525) étant configurés pour, avec l'au moins un processeur (510), amener le dispositif de commande (110) à :
recevoir des données de configuration système (120) fournissant au moins une topologie de réseau du réseau de communication et des définitions du dispositif de signalisation d'ascenseur (ESD1, ESD2, ESD3, ESD4, ESD5, ESD6), les définitions du dispositif de signalisation d'ascenseur (ESD1, ESD2, ESD3, ESD4, ESD5, ESD6) dans les données de configuration système (120) définissant au moins un emplacement du dispositif de signalisation d'ascenseur (ESD1, ESD2, ESD3, ESD4, ESD5, ESD6) dans un bâtiment dans lequel fonctionne le système d'ascenseur et un port de communication d'un dispositif de commutation (SD1, SD2) auquel le dispositif de signalisation d'ascenseur (ESD1, ESD2, ESD3, ESD4, ESD5, ESD6) est connecté de manière communicative,
interroger, conformément à la topologie de réseau du réseau de communication, une adresse réseau du dispositif de signalisation d'ascenseur (ESD1, ESD2, ESD3 ESD4, ESD5, ESD6) du dispositif de commutation (SD1, SD2), une interrogation étant réalisée sur la base d'un port de communication du dispositif de commutation (SD1, SD2),
associer l'emplacement du dispositif de signalisation d'ascenseur (ESD1, ESD2, ESD3, ESD4, ESD5, ESD6) dans le bâtiment tel que défini dans le fichier de configuration système (120) à l'adresse réseau du dispositif de signalisation d'ascenseur (ESD1, ESD2, ESD3, ESD4, ESD5, ESD6), reçue par le biais de l'interrogation, sur la base du port de communication du dispositif de commutation (SD1, SD2) qui dessert le dispositif de signalisation d'ascenseur (ESD1, ESD2, ESD3, ESD4, ESD5, ESD6), et
mettre en service le dispositif de signalisation d'ascenseur (ESD1, ESD2, ESD3, ESD4, ESD5, ESD6) en transmettant des données de configuration du dispositif de signalisation d'ascenseur (ESD1, ESD2, ESD3, ESD4, ESD5, ESD6) à l'adresse réseau du dispositif de signalisation d'ascenseur (ESD1, ESD2, ESD3, ESD4, ESD5, ESD6) reçue par association.

6. Dispositif de commande (110) selon la revendication 5, le dispositif de commande (110) étant conçu pour recevoir des adresses réseau des dispositifs de signalisation d'ascenseur (ESD1, ESD2, ESD3, ESD4, ESD5, ESD6) sur la base du port de communication à partir d'une pluralité de dispositifs de commutation (SD1, SD2) du système d'ascenseur.

7. Dispositif de commande (110) selon l'une quelconque des revendications 5 à 6 précédentes, le dispositif de commande (110) étant conçu pour réaliser une association de l'emplacement du dispositif de signalisation d'ascenseur (ESD1, ESD2, ESD3, ESD4, ESD5, ESD6) à l'adresse réseau du dispositif de signalisation d'ascenseur (ESD1, ESD2, ESD3, ESD4, ESD5, ESD6) en modifiant les données de configuration système (120) en ajoutant l'adresse réseau du dispositif de signalisation d'ascenseur (ESD1, ESD2, ESD3, ESD4, ESD5, ESD6) dans un contexte de données du dispositif de signalisation d'ascenseur (ESD1, ESD2, ESD3, ESD4, ESD5, ESD6).

8. Dispositif de commande (110) selon l'une quelconque des revendications 5 à 7 précédentes, le dispositif de commande (110) étant amené en outre à :
fournir les données décrivant l'association à un contrôleur d'ascenseur (EC) du système d'ascenseur.

9. Produit de programme d'ordinateur pour la mise en service d'un dispositif de signalisation d'ascenseur (ESD1, ESD2, ESD3, ESD4, ESD5, ESD6) relativement à un réseau de communication d'un système d'ascenseur, le produit de programme d'ordinateur, à son exécution par l'au moins un processeur du dispositif de commande (110) selon l'une quelconque des revendications 5 à 8, amenant le dispositif de commande (110) à réaliser le procédé selon l'une quelconque des revendications 1 à 4.
